Europäisches Patentamt

European Patent Office

Office européen des brevets

(19)

(11) Veröffentlichungsnummer: **0 152 618**
**B1**

(12) # EUROPÄISCHE PATENTSCHRIFT

(45) Veröffentlichungstag der Patentschrift:
**07.10.87**

(51) Int. Cl.⁴: **C 02 F 1/78,** C 02 F 1/76,
C 02 F 3/22

(21) Anmeldenummer: **84116190.4**

(22) Anmeldetag: **22.12.84**

(54) **Verfahren und Vorrichtung zum Behandeln von Wasser.**

(30) Priorität: **23.02.84 CH 885/84**

(43) Veröffentlichungstag der Anmeldung:
**28.08.85 Patentblatt 85/35**

(45) Bekanntmachung des Hinweises auf die Patenterteilung:
**07.10.87 Patentblatt 87/41**

(84) Benannte Vertragsstaaten:
**CH DE GB LI NL**

(56) Entgegenhaltungen:
DE - A - 3 208 912
FR - A - 1 180 507
FR - A - 2 357 484
FR - E - 81 132
US - A - 1 710 301
US - A - 3 628 775
US - A - 3 671 022

(73) Patentinhaber: **BBC Brown Boveri AG, CH-5401 Baden
(CH)**

(72) Erfinder: **Gaia, Franco, Rossee, CH-6987 Casiano (CH)**

**Beschreibung**

Die Erfindung bezieht sich auf ein Verfahren zum Behandeln von Wasser nach dem Oberbegriff des Patentanspruchs 1 sowie auf eine Vorrichtung zur Durchführung des Verfahrens.

Bei der Aufbereitung von Wasser zu Trinkwasser oder für verfahrenstechnische Zwecke der Off-shore-Technik wird dem aus Tiefen von 30 bis mehr als 50 Metern gepumpten Wasser ein gasförmiges oder flüssiges Reagens zugeführt, um es für den betreffenden Verwendungszweck brauchbar zu machen.

Bei einem bekannten Verfahren wird am unteren Ende des Pumpensteigrohres dem Wasser Chlor, Ozon, ozonhaltige Luft oder eine Flüssigkeit oder Lösung zugemischt, welche Reagenzien dann im Steigrohr selbst und in den nachgeschalteten Anlageteilen die gewünschte Behandlung des Wassers bewirken.

Bei der Zumischung von Gasen entsteht dabei das Problem, dass mit zunehmender Wassertiefe das Gas oder Gasgemisch vergleichweise stark komprimiert werden muss, was insbesondere bei Ozon oder ozonhaltigen Gasen zu Schwierigkeiten führt, da sich beim Komprimieren ein Teil des Ozons wieder zersetzt.

Aus der US-A-1 710 301 ist ferner ein Verfahren bekannt, bei welchem Wasser abgezweigt, mit einem Gas versetzt und wieder in das Reservoir zurückgeführt wird. Das Vermischen von Gas und Wasser findet dabei im wesentlichen im gesamten Reservoir — nicht in einem Blasensäulen-Abstromreaktor — statt und ist aus diesem Grunde wenig intensiv.

Der Erfindung, wie sie in den Patentansprüchen gekennzeichnet ist, liegt die Aufgabe zugrunde, ein Verfahren anzugeben, das die vorstehend geschilderten Unzulänglichkeiten nicht aufweist und sich durch seine Wirtschaftlichkeit auszeichnet.

Aufgabe der Erfindung ist ferner die Schaffung einer zur Durchführung des erfindungsgemässen Verfahren geeigneten Vorrichtung.

Das Vermischen von Gas, insbesondere von Ozon, mit Wasser in einem Blasensäulen-Abstromreaktor ist an sich bekannt (vgl. beispielsweise FR-A-1 180 507), doch wird durch die erfindungsgemässe Hintereinanderschaltung von praktisch drei Behandlungsstufen — Mischung im Mischer selbst, Blasensäulen-Abstromreaktor und Steigrohr der Pumpenanordnung — eine innige Durchmischung auf einer vergleichsweise langen Behandlungsstrecke erzielt. Probleme beim Komprimieren und Einleiten des Gases in grosser Wassertiefe entfallen. Energetisch gesehen müssen nur Reibungsverluste der strömenden Flüssigkeit in Kauf genommen werden.

In der Mischstufe können klassische Mischer ohne weiteres verwendet werden, also z.B. Injektoren, statische Mischer, Diffusoren oder Turbinenmischer, wobei sich deren Auswahl nach der Qualität der Blasenbildung allein richten kann.

In der zweiten Behandlungsstufe, dem Blasensäulen-Abstromreaktor, wird das Gas oder Gasgemisch allein durch die Strömung des Wassers in praktisch beliebige Wassertiefe gefördert. Infolge des zunehmenden Wasserdruckes nimmt zwar der Blasendurchmesser mit grösserwerdender Tiefe ab, doch begünstigt dies gerade den Stoffaustausch zwischen Gas und Wasser in vorteilhafter Weise. Dieser Stoffaustausch setzt sich im Steigrohr der Pumpenanordnung — begünstigt durch die Zumischung des Blasen enthaltenden vorbehandelten Wassers zum Frischwasser auf einer langen Wegstrecke fort.

Die erfindungsgemässe Vorrichtung zur Durchführung des Verfahrens lässt sich insbesondere bei Anlagen der Off-shore Technik einfach realisieren, da sie wenig Platzbedarf auf Deck aufweist, und die Reaktoren vorteilhaft als an den Tragsäulen der Plattform verankerte Rohre entsprechender Länge ausgebildet werden können.

Weitere Vorteile und besondere Ausgestaltungen der Erfindung ergeben sich aus den abhängigen Ansprüchen in Verbindung mit der nachfolgenden Beschreibung eines Ausführungsbeispiels, anhand dessen auch das erfindungsgemässe Verfahren näher erläutert werden soll.

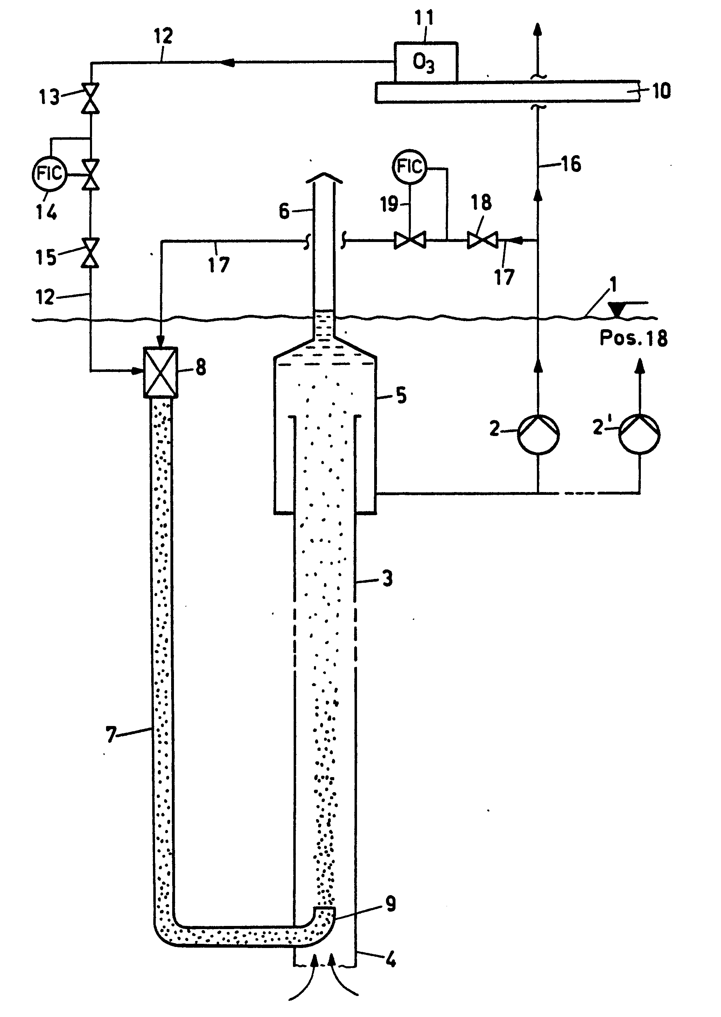

Die einzige Figur der Zeichnung zeigt schematisch eine Anlage zur Behandlung von Wasser mit gasförmigen Stoffen, wie sie in der Off-shore Technik Verwendung findet.

Unterhalb des Meeresspiegels 1 ist in etwa 8 bis 10 Metern Tiefe eine Pumpe 2 mit einem Steigrohr 3 angeordnet. Das untere Ende 4 des Steigrohres endet in einer Tiefe von 35 bis 50 Metern. Am oberen Ende des Steigrohres 3 ist ein Gasabscheider 5 mit einem oberhalb des maximalen Meeresspiegels endenden Kamin 6 vorgesehen. Neben dem Steigrohr 3 ist ein zweites Rohr 7 mit einem kleineren Querschnitt angeordnet, das an seinem oberen Ende einen Mischer 8 trägt und dessen unteres Ende zum Steigrohr hin abgezogen ist, durch die Wandung am unteren Ende 4 des Steigrohrs hindurchtritt und einen nach oben weisenden, mittig im Steigrohr 3 gelegenen Stutzen 9 aufweist. Auf dem Deck einer nicht näher dargestellten Plattform 10 steht ein Ozonerzeuger 11. Das darin erzeugte Ozon oder mit Ozon angereicherte Gasgemisch wird über eine Leitung 12 ein erstes Ventil 13, einen Mengenregler 14 und ein zweites Ventil 15 dem Gaseintritt des Mischers 8 zugeführt.

Das von der Pumpe 2 aus dem Gasabscheider 5 geförderte behandelte Wasser wird zum grössten Teil über eine Leitung 16 dem vorgesehenen Verwendungszweck, z.B. Kühlung der Aggregate der Plattform usw. zugeführt. Eine kleinerer Teil, typisch 10 bis 20% gelangt über eine Zweigleitung 17 und ein Ventil 18 und einen Mengenregler 19 zum Flüssigkeitseintritt des Mischers 8.

Die Wirkungsweise der beschriebenen Anlage geht aus folgendem hervor:

Im Mischer 8 wird dem über die Leitung 17 zugeführten Wasser eine dosierte Menge Ozon/pro Zeiteinheit zugemischt. Bereits im Mischer bilden sich Gasblasen, die durch die nach unten gerichtete Wasserströmung entgegen der Schwerkraft mitgerissen werden. Die Strömungsgeschwindigkeit des Wassers ist so bemessen, dass diese grösser ist als die Steiggeschwindigkeit der Blasen infolge Auftrieb und liegt oberhalb 0,3 m/sec, vorzugsweise zwischen 0,5 und 1 m/sec.

Bereits im Mischer 8 und in noch stärkerem Masse in dem Rohr 7, das in Verbindung mit dem Mischer 8 als Blasensäulen-Abstromreaktor angesehen werden kann [vgl. Chem.-Ing. Tech. 50 (1978), Nr. 12, S. 944-947, Verlag Chemie, Weinheim], findet ein intensiver Stoffaustausch statt, der durch das Kleinerwerden der Gasblasen mit zunehmender Wassertiefe noch beschleunigt wird. Nach Eintritt des so vorbehandelten Wassers in das untere Ende des Steigrohrs 3 wird dieses Wasser mit dem angesaugten Frischwasser vermischt. Dabei erfolgt im Zuge der nach oben gerichteten Strömung im Rohr 3 ein weiterer Stoffaustausch. Das Restgas gelangt über den Kamin 6 ins Freie, während die Flüssigkeit durch die Pumpe 2 und Leitung 16 zur Plattform 10 gefördert wird.

Der Mengenregler 19 ist so eingestellt, dass zwischen 10 und 30% der von der Pumpe 2 geförderten Wassermenge dem Mischer 8 wieder zugeführt werden.

Nach der Startphase der Anlage stellt sich ein quasi-stationärer Zustand ein, bei dem behandeltes Wasser dem Mischer 8 zugeführt und dort mit Ozon bzw. ozonhaltigem Gas, z.b. ozonhaltiger Luft, angereichert wird. Dabei erhellt, dass zur Aufrechterhaltung des der Pumpanordnung parallelgeschalteten Anreicherungskreises, bestehend aus Leitung 17, Mischer 8, Rohr 7, nur vergleichsweise wenig Leistung aufgewendet werden muss, da im wesentlichen nur Reibungswiderstände zu überwinden sind.

Der im Zuge der Leitung 12 angeordnete Mengenregler 14 für die Gaszufuhr macht in Verbindung mit der Mengenregelung des rezirkulierten (behandelten) Wassers die Anlage unabhängig vom Meeresspiegel 1.

Die praktische Ausführung der Anlage gestaltet sich insofern einfach, als die beiden Reaktoren, Rohr 7 und Steigrohr 3 ohne grossen Aufwand an den ohnehin vorhandenen Stützen der Plattform 10 befestigt werden können. Auch ein Umbau einer bestehenden Anlage ist infolge des Vorhandenseins des Steigrohrs der Pumpenanordnung wenig aufwendig.

Das erfindungsgemässe Verfahren wurde anhand einer Off-shore Anlage beschrieben. Es liegt selbstverständlich im Rahmen der Erfindung, das Verfahren bei Anlagen zur Trinkwassergewinnung aus Seen anzuwenden. Auch kann statt Ozon oder einem ozonhaltigem Gasgemisch ein anderes Behandlungsgas, z.B. Chlor, verwendet werden.

Des weiteren kann die räumliche Anordnung der Rohre 7 und 3 den Bedürfnissen entsprechend variiert sein. So kann z.B. das Steigrohr 3 konzentrisch im Innern des Rohres 7 des Blasensäulen-Abstromreaktors liegen, oder umgekert. Auch können mehrere Rohre 7 im Innern des Steigrohres 3 angeordnet sein. Eine weitere Alternative kann darin bestehen, dass mehrere Rohre 7 entsprechend kleineren Durchmessers das Steigrohr 3 konzentrisch umgeben und sich an ihm abstützen.

Ordnet man dann jedem Rohr 7, also jedem Blasensäulen-Abströmreaktor, eine eigene Pumpe zu, welche sämtlich in die Leitung 16 fördern — die Zweigleitung 17 zweigt dabei nach wie vor von dieser «Sammelleitung» 16 ab, lässt sich in einfacher Weise die Leistung der Gesamtanlage den unterschiedlichen Bedürfnissen des Betriebes anpassen, indem eine oder mehrere Pumpen zu- oder abgeschaltet werden.

Da der Druckabfall im Kreis Leitung 17, Ventil 18, Mengenregler 19, Mischer 8 und Rohr 7 bis zum Stutzen 9 sehr gering ist, kann dieser Kreis statt über die Zweigleitung 17 vorteilhaft über eine der Pumpe 2 parallelgeschaltete Hilfspumpe 2' kleinerer Leistung und kleinerer Förderhöhe beaufschlagt werden. Dies ist in der Figur beispielsweise verdeutlicht. Die Leitungsverbindung zwischen Leitung 16 und dem Ventil 18 entfällt, die Hilfspumpe 2' ist ausgangsseitig unmittelbar mit dem Ventil 18 verbunden.

**Patentansprüche**

1. Verfahren zur Behandlung von Wasser mit einem gasförmigen Stoff oder Stoffgemisch, wobei in einem Mischer (8) der gasförmige Stoff oder das Stoffgemisch in die Flüssigkeit eingebracht wird und eine Pumpanordnung, umfassend ein Steigrohr und eine unterhalb des Wasserspiegels angeordnete Pumpe, zum Ansaugen und Weiterleiten des behandelten Wassers oberhalb des Wasserspiegels vorgesehen ist, dadurch gekennzeichnet, dass das im Mischer angereicherte Wasser durch einen Blasensäulen-Abströmreaktor (7) mit einer Geschwindigkeit grösser als die Steiggeschwindigkeit der im Mischer gebildeten Gasblasen zum unteren Ende (4) des Steigrohrs (3) der Pumpe (2) geleitet wird, und dass das behandelte Wasser nach Passieren eines Gasabscheiders (5) und der Pumpe (2) zum grösseren Teil seiner bestimmungsgemässen Verwendung zugeführt wird, währen der kleinere Teil wieder dem Mischer (8) zugeleitet wird.

2. Verfahren nach Anspruch 1, dadurch gekennzeichnet, dass durch den Blasensäulen-Abströmreaktor (7) zwischen 10 und 30% des durch die Pumpe geförderten Wassers geführt wird.

3. Verfahren nach Anspruch 1 oder 2, dadurch gekennzeichnet, dass mittels eines Mengenreglers (19) die Strömungsgeschwindigkeit des Wassers im Blasensäulen-Abströmreaktor (7) auf einen Wert grösser 0,3 m/sec, vorzugsweise zwischen 0,5 und 1 m/sec eingestellt wird.

4. Verfahren zur Durchführung des Verfahrens nach Anspruch 1, gekennzeichnet durch eine Pumpenordnung mit einem Steigrohr (3), dessen oberes Ende einen Gasabscheider (5)( aufweist und dessen unteres Ende (4) mit einem Blasensäulen-Abströmreaktor verbunden ist, wobei der Blasensäulen-Abströmreaktor im wesentlichen ein vertikal angeordnetes Rohr (7) mit einem Mischer (8) an dessen oberen Ende aufweist, durch eine Gaserzeugungsanlage (10), die über einen ersten Mengenregler (14) mit dem Gaseintritt des Mischers (8) verbunden ist, und ferner durch eine von der Leitung (16) hinter der Pumpe (2) abzweigende Zweigleitung (17) bzw. eine separate Hilfspumpe (2'), die über einen zweiten Mengenregler (19) an den Wassereintritt des Mischers (8) führt.

5. Verfahren nach Anspruch 4, dadurch gekennzeichnet, dass das Steigrohr (3) und das Rohr (7) des Blasensäulen-Abströmreaktors annähernd gleich lang sind und deren Querschnitte sich wie 1 : 10 bis 1 : 3 verhalten.

6. Vorrichtung nach Anspruch 4 oder 5, dadurch gekennzeichnet, dass einer Pumpanordnung (2, 3, 4, 5) mehrere Blasensäulen-Abströmreaktoren zugeordnet sind, die über Ventile (13, 18) zuschaltbar sind.

## Claims

1. Process for treating water with a gaseous substance or substance mixture, the gaseous substance or substance mixture being introduced into the liquid in a mixer (8), and a pumping arrangement comprising a riser and a pump disposed below the water level being provided for aspiring and delivering the treated water above the water level, characterized in that the water enriched in the mixer is passed through a bubble column downward-flow reactor (7), at a velocity greater than the rising velocity of the gas bubbles formed in the mixer, to the lower end (4) of the riser (3) of the pump (2), and that the major part of the treated water, after having passed through a gas separator (5) and the pump (2), is fed to its intended use, whereas the minor part is recycled to the mixer (8).

2. Process according to claim 1, characterized in that between 10 and 30% of the water delivered by the pump is passed through the bubble column downward-flow reactor (7).

3. Process according to claim 1 or 2, characterized in that the flow velocity of the water in the bubble column downward-flow reactor (7) is adjusted to a value greater than 0.3 m/second, preferably between 0.5 and 1 m/second, by means of a flow controller (19).

4. Equipment for carrying out the process according to claim 1, characterized by a pump arrangement with a riser (3), the upper end of which has a gas separator (5) and the lower end (4) of which is connected to a bubble column downward-flow reactor, the bubble column downward-flow reactor essentially comprising a vertically disposed pipe (7) with a mixer (8) at its upper end, by a gas-generating unit (10) which is connected via a first flow controller (14) to the gas inlet of the mixer (8), and also by a branch line (17), branching off from the line (16) down-stream of the pump (2), or by a separate auxiliary pump (2'), which leads via a second flow controller (19) to the water inlet of the mixer (8).

5. Equipment according to claim 4, characterized in that the riser (3) and the pipe (7) of the bubble column downward-flow reactor are of approximately the same length and their cross-sections are in the ratio of 1 : 10 to 1 : 3.

6. Equipment according to claim 4 or 5, characterized in that several bubble column downward-flow reactors which can be connected in via valves (13, 18) are associated with one pumping arrangement (2, 3, 4, 5).

## Revendications

1. Procédé pour le traitement de l'eau à l'aide d'une matière ou d'un mélange de matières à l'état gazeux, suivant lequel la matière ou le mélange de matières à létat gazeux est introduit dans le liquide dans un mélangeur (8) et il est prévu un dispositif de pompage comprenant un tube ascendant et une pompe disposée sous le niveau de l'eau, afin d'aspirer et de propulser l'eau traitée au-dessus du niveau de l'eau, caractérisé en ce que l'eau enrichie dans le mélangeur est conduite par un réacteur d'écoulement à colonne de bulles (7) avec une vitesse supérieure à la vitesse d'ascension des bulles de gaz formées dans le mélangeur jusqu'à l'extrémité inférieure (4) du tube ascendant (3) de la pompe (2) et en ce que l'eau traitée, après passage par un séparateur de gaz (5) et la pompe (2), est amenée pour la plus grande partie à son utilisation prévue, tandis que la plus petite partie est ramenée au mélangeur (8).

2. Procédé suivant la revendication 1, caractérisé en ce qu'il passe, par le réacteur d'écoulement à colonne de bulles (7), entre 10 et 30% de l'eau propulsée par la pompe.

3. Procédé suivant la revendication 1 ou 2, caractérisé en ce que la vitesse d'écoulement de l'eau dans le réacteur d'écoulement à colonne de bulles (7) est réglée, par un régulateur de quantité (19), à une valeur supérieure à 0,3 mètre par seconde et, de préférence, entre 0,5 et 1 mètre par seconde.

4. Installation pour la conduite du procédé suivant la revendication 1, caractérisé par un dispositif de pompage comprenant un tube ascendant (3) dont l'extrémité supérieure comporte un séparateur de gaz (5) et dont l'extrémité inférieure (4) communique avec un réacteur d'écoulement à colonne de bulles, le réacteur d'écoulement à colonne de bulles comprenant essentiellement un tube (7) agencé verticalement avec un mélangeur (8) à son extrémité supérieure, par un dispositif générateur de gaz (10) qui communique, par un premier régulateur de quantité (14), avec l'admission de gaz du mélangeur (8), ainsi que par une conduite de dérivation (17) partant de la conduite (16) à l'aval de la pompe (2) ou par une pompe auxiliaire (2') distincte qui mène, en passant par un second régulateur de quantité (19), à l'entrée d'eau du mélangeur (8).

5. Installation suivant la revendication 4, caractérisé en ce que le tube ascendant (3) et le tube (7) du réacteur d'écoulement à colonne de bulles ont à peu près la même longueur et leurs sections sont dans le rapport de 1 : 10 à 1 : 3.

6. Installation suivant la revendication 4 ou 5, caractérisé en ce que plusieurs réacteurs d'écoulement à colonne de bulles, qui peuvent être mis en circuit par des valves (13, 18), sont adjoints à un dispositif de pompage (2, 3, 4, 5).